# FASCICULE DE BREVET EUROPEEN

(11) **EP 3 863 921 B1**
(45) Date de publication et mention de la délivrance du brevet: **14.09.2022**
(21) Numéro de dépôt: 19784048.1
(22) Date de dépôt: 07.10.2019
(51) Int. Cl.: B64C 1/14

(54) **PROCÉDÉ D'OUVERTURE/FERMETURE D'UNE PORTE D'AERONEF ET AERONEF DE MISE EN OEUVRE D'UN TEL PROCÉDÉ**
VERFAHREN ZUM ÖFFNEN/SCHLIESSEN EINER FLUGZEUGTÜR UND FLUGZEUG MIT EINEM SOLCHEN VERFAHREN
METHOD FOR OPENING/CLOSING AN AIRCRAFT DOOR AND AIRCRAFT IMPLEMENTING SUCH A METHOD

(30) Priorité: 10.10.2018 FR 1859376
(43) Date de publication de la demande: 18.08.2021
(73) Titulaire: Latecoere, 31500 Toulouse, Occitanie (FR)
(72) Inventeur: DUBOSC, Grégory, 82170 GIROLLES OCCITANIE (FR)
(74) Mandataire: Schwartz, Thierry J.
(86) Numéro de dépôt international: PCT/EP2019/077098
(87) Numéro de publication internationale: WO 2020/074449

(56) Documents cités:
- EP-A1- 1 227 034
- EP-A2- 0 317 037
- EP-A2- 2 008 846
- EP-B1- 1 558 492
- WO-A2-2010/001210
- US-A- 2 564 988
- US-A- 2 751 636
- US-A- 2 763 900
- US-A- 5 379 971

## Description

### DOMAINE TECHNIQUE

L'invention se rapporte à un procédé d'ouverture / fermeture d'une porte agencée dans une ouverture de fuselage d'aéronef, ainsi qu'à un aéronef équipé d'un mécanisme de mise en œuvre de ce procédé d'ouverture. Plus particulièrement, cette invention se rapporte aux portes d'aéronef dites « semi-plug », c'est-à-dire aptes à traverser leur encadrement à l'occasion de leur ouverture ou fermeture.

Les fuselages d'aéronef sont généralement pourvus de plusieurs ouvertures permettant l'entrée ou la sortie de personnes ou de fret dans l'aéronef, c'est pourquoi les portes d'aéronef sont équipées de systèmes de verrouillage assurant à la fois une fermeture sûre, rapide et étanche de la porte dans le fuselage.

En effet, dans le domaine aéronautique, le système de verrouillage d'une porte assure la solidité de la fermeture et l'étanchéité de cette porte pendant le vol. De plus, l'ouverture doit être simple et rapide à réaliser par le personnel navigant. La résistance à la différence de pression entre intérieur de l'habitacle et l'extérieur de l'avion est avantageusement réalisé au moyen de butées installées sur les pourtours de la porte et de son encadrement.

Différents systèmes d'ouverture/fermeture de porte d'aéronef existent. Un premier type de système consiste, en ouverture, d'abord à lever ou baisser la porte, puis à lui appliquer des mouvements de rotation et de translation pour la dégager de son encadrement parallèlement à celui-ci. Un autre type d'ouverture/fermeture de porte consiste d'abord à effectuer un premier pivotement autour d'un premier axe virtuel passant par la médiane verticale de la porte puis, dans un deuxième temps, la porte est pivotée autour de charnières placées sur le long d'un axe coïncidant avec un bord vertical de l'encadrement, ce qui entraîne une position finale de porte avec sa partie interne tournée vers l'extérieur.

**Des** améliorations de base ont été apportées au premier type d'ouverture/fermeture par des ajouts visant à faciliter la tâche du personnel navigant: l'ajout d'un mécanisme de compensation de masse à ce système évite au personnel navigant de soulever tout le poids de la porte lors de son ouverture ou de sa fermeture ; l'ajout d'un mécanisme gérant le mouvement vertical relatif entre la porte et un bras d'articulation aidant à déplacer la porte; ou encore avec l'ajout d'une bavette permettant d'éviter la formation d'un vide entre la peau du fuselage et la peau de la porte, ce trou apparaissant lors du mouvement vertical de la porte. Concernant le deuxième type d'ouverture/fermeture, il a l'inconvénient d'une intrusion importante de la porte à l'intérieur de la cabine de l'aéronef lors de sa rotation autour du premier axe, ce qui pose un problème d'espace indisponible et d'encombrement en cas d'évacuation d'urgence.

### ÉTAT DE LA TECHNIQUE

D'autres améliorations ont été proposées pour une meilleure adaptation des systèmes d'ouverture/fermeture d'aéronef. Par exemple, le document de brevet EP 3321174 présente une porte d'aéronef dont la structure composite est capable de se rétracter, en plissant sa surface, pour permettre à cette porte, qui occulte initialement l'ouverture, de passer vers l'extérieur pour se placer de côté par rapport à l'encadrement. Cependant une telle porte est d'une pratique d'utilisation malaisée.

**Un** autre document, EP 0 741 073, présente une aide à la manipulation d'une porte d'aéronef par un système hydraulique présentant l'avantage d'amortir la course de la porte en fin de déplacement. Mais un tel système hydraulique est techniquement trop compliqué pour de telles portes.

**Par** ailleurs, le document US 2 751 636 se rapporte à une porte de cabine « enfichable » équipée de leviers articulés autour d'un axe pour relier une partie avant d'encadrement et la porte et des liaisons mobiles pour relier un axe de porte en sa partie arrière et l'axe d'articulation des leviers. Ces moyens ne permettent pas de combiner des mouvements de rotation et de translation sûrs et d'éviter une introduction sensible de la porte dans la cabine.

**En** référence au document EP 0 317 037, un rail en forme de « S » est utilisé pour faire pivoter une porte de cabine d'aéronef selon un mouvement de rotation vers l'extérieur via un levier articulé sur la porte et guidé dans le rail. Cette solution implique l'introduction de la porte dans la cabine et l'utilisation d'un mécanisme de pilotage de mouvement vertical de la porte.

### EXPOSÉ DE L'INVENTION

L'invention a pour objectif principal de réaliser une cinématique d'ouverture/fermeture de porte d'aéronef et le mécanisme associé qui ne présente pas les inconvénients ci-dessus, en particulier qui soit à la fois sûr, simple, facile à manipuler tout en minimisant l'introduction de la porte à l'intérieur de la cabine de l'aéronef et en supprimant le mouvement de levage de la porte. Pour ce faire, l'invention prévoit, lors de la libération de la porte, d'appliquer dans un déplacement horizontal un mouvement qui libère les butées d'un côté de la porte puis de l'autre, sans que les butées du fuselage soient proéminentes.

Plus précisément, la présente invention a pour objet un procédé d'ouverture / fermeture d'une porte agencée dans une ouverture de fuselage d'aéronef définie par une structure d'encadrement, la porte comportant une face intérieure ainsi que des parties avant et arrière définies par rapport à un axe longitudinal de l'aéronef orienté conventionnellement. La porte et l'encadrement de l'aéronef comportent des butées de positionnement avant et arrière de la porte dans l'encadrement. La cinématique des mouvements de la porte par rapport au fuselage se déroule depuis l'encadrement dans un plan principal horizontal d'aéronef par au moins un bras de manipulation et est pilotée, de manière réversible, par au moins un guidage entre une position de fermeture en butée dans l'encadrement et une position d'ouverture hors de l'encadrement en face intérieure de porte contre le fuselage. Ce procédé comporte les étapes suivantes, en mode d'ouverture de porte :
- une commande à glissière d'ouverture de porte guide la porte selon des positions vers l'avant et vers l'arrière de l'aéronef;
- cette commande génère un premier déplacement de la porte vers l'arrière et vers l'intérieur de l'aéronef par une combinaison de guidages à glissière des parties avant et arrière de la porte respectivement selon une rotation et une translation, ce qui dégage les butées de la porte des butées du fuselage ;
- puis un déplacement de porte par rotation autour du guidage arrière et translation inclinée vers l'avant et l'extérieur de l'aéronef le long du guidage avant, la partie avant de la porte et ses butées avant se dégageant alors de l'encadrement vers l'extérieur de l'aéronef; et
- le bras est actionné en rotation autour d'une liaison articulée sur un côté avant de l'encadrement afin de déplacer la porte vers l'avant de l'aéronef, son déplacement s'achevant hors de l'encadrement avec la face intérieure de porte contre le fuselage.

En mode de fermeture, le procédé d'ouverture / fermeture de la porte, les étapes successives du mode d'ouverture sont enchaînées selon une cinématique inversée.

Avantageusement, des moyens de rappel permettent d'adapter la position de l'avant-bras par rapport au bras par extension de ces moyens de rappel pour générer un déplacement en rotation de la partie arrière de porte ainsi qu'une translation de la porte vers l'avant de l'aéronef parallèlement au fuselage, les butées de porte arrière et avant étant alors sorties de l'encadrement.

Ainsi, la présente invention permet de maintenir la porte quasiment hors de la cabine de l'aéronef sans la soulever et sans la faire pénétrer à l'intérieur de l'aéronef. De plus, seulement deux guidages mécaniques réalisent un dégagement horizontal des butées, ce qui permet de s'affranchir d'un mécanisme de compensation de masse, d'un mécanisme de pilotage de mouvement vertical entre la porte et le bras et d'une bavette d'étanchéité de porte.

L'invention se rapporte également à un aéronef comportant au moins une porte équipée d'un mécanisme d'ouverture/ fermeture de mise en œuvre de ce procédé, un fuselage et au moins une ouverture de fuselage pour insérer cette porte. Une telle porte, agencée dans l'ouverture de fuselage par la structure d'encadrement, comporte une face intérieure et des parties avant et arrière, définies par rapport à un axe longitudinal de l'aéronef orienté conventionnellement, la porte et l'encadrement de l'aéronef comportant des butées de reprise pression de la porte dans l'encadrement. Le déplacement de la porte, dans un plan principal horizontal de l'aéronef, est piloté par couplage entre la porte et l'encadrement sur une rampe de commande et sur deux guides à glissière, avant et arrière, agencés entre les parties de porte, respectivement avant et arrière, et l'encadrement couplé à au moins un bras de manipulation articulé en rotation sur un côté avant de l'encadrement et à la porte via un avant-bras.

Selon des caractéristiques avantageuses :
- la rampe de commande et les guides comportent, chacun, une glissière associée à un galet de circulation dans la glissière, les glissières de guide étant ouvertes en une extrémité;
- les glissières sont fixées sur l'encadrement et les galets sont solidaires de la porte, ou inversement les glissières sont fixées sur la porte et les galets sont solidaires de l'encadrement ;
- la rampe de commande est agencée en partie avant et supérieure de porte, et les guides avant et arrière sont respectivement agencés en partie avant inférieure de porte et en partie arrière supérieure de porte;
- des moyens de rappel entre le bras et l'avant-bras adaptent en extension la position de l'avant-bras par rapport au bras ;
- la rampe de commande et l'un des guides sont agencés entre le bras et la porte, les galets pouvant être alignés sur un même axe solidaire du bras;
- le mécanisme d'ouverture / fermeture comporte deux bras et deux avant-bras, chaque bras étant couplé à un avant-bras.

Dans le présent texte, le terme " galet " désigne une pièce de circulation dans un guide - glissière, rail ou équivalent - c'est-à-dire aussi bien une pièce de roulement mobile en rotation lors de son déplacement sur une rampe ou dans un chemin de came, glissière, piste ou équivalent, qu'un doigt non rotatif, se déplaçant en translation. De plus, l'expression « moyens de rappel » désigne tout élément élastique capable d'exercer une force de rappel : ressort, lame, tresse, came, etc. Par ailleurs, les termes "Vertical" ou "horizontal" qualifie une direction parallèle à la direction de la gravitation terrestre ou respectivement dans un plan perpendiculaire à cette direction.

En outre, le qualificatif " longitudinal " se réfère à la direction principale du fuselage de l'avion, " avant " et " arrière " aux qualificatifs conventionnels de localisation dans un avion, à savoir du côté du cockpit et du côté de la queue d'un avion. Par ailleurs, des positions respectivement « haute » et « basse » ou encore « supérieure » et « inférieure » de moyens - des extrémités, des butées, des rampes ou guides - se réfèrent à des positions en bordure respectivement supérieure et inférieure dans la porte d'aéronef, au sens de plus éloignée ou moins éloignée du plancher de cabine. De plus, " extérieur " ou " externe " (respectivement " intérieur " ou " interne ") qualifie une localisation située à l'extérieur (respectivement à l'intérieur) de la cabine d'avion, en d'autres termes hors (respectivement à l'intérieur) du fuselage de l'avion.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue de face et en transparence d'un exemple de mécanisme d'ouverture / fermeture de porte selon l'invention en position fermée, avec deux guides avant et arrière, respectivement en position basse et haute de la porte, et d'une rampe de commande en position de porte avant haute;
- les figures 2a à 2d, une vue de dessus et en transparence de la porte en mouvement d'ouverture selon l'invention ;
- la figure 3, une vue de face en perspective et en transparence de la porte en position ouverte;
- la figure 4, une vue en transparence de la rampe de commande du mécanisme de la figure 1;
- la figure 5, une vue en perspective d'un guide avant et d'une rampe de commande alternatifs positionnés au niveau du bras dans un autre exemple de réalisation du mécanisme d'ouverture / fermeture de porte; et
- les figures 6a à 6d, une vue de dessus schématique et en transparence de la cinématique de la porte en mouvement d'ouverture dans l'autre exemple de réalisation.

### DESCRIPTION DÉTAILLÉE

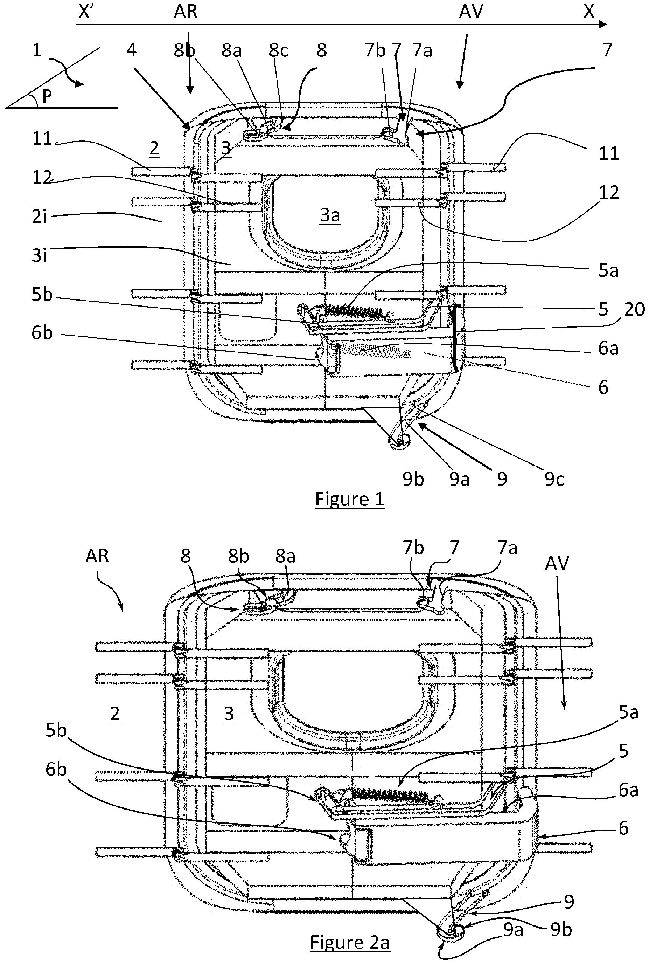

En référence au schéma en transparence de la figure 1, est présentée une partie intérieure d'aéronef 1 avec la face interne 2i de fuselage 2 et la face interne 3i de la porte 3 agencée dans l'encadrement fuselage 4 en position fermée. L'axe longitudinal X'X indique le sens d'avancement normal de l'aéronef 1, et définit une partie avant AV et arrière AR de la porte 3. L'encadrement 4 dispose de plusieurs butées de reprise des efforts de pressurisation dites butées de maintien 11 (huit butées dans cet exemple de réalisation) servant à maintenir la porte 3 en place dans son encadrement 4. Cette porte 3 dispose également de plusieurs butées de maintien fixes 12 (huit butées dans cet exemple de réalisation) s'appuyant sur les butées 11 de l'encadrement 4, d'un hublot 3a, et de deux bras d'articulation, un bras de manipulation 5 et une bielle 6 dans l'exemple. Ces bras 5, 6 sont montés sur une liaison articulée 20 au côté avant de l'encadrement 4 afin d'entraîner la porte 3 en mouvement sur l'encadrement 4.

Chaque bras 5, 6 est couplé à un avant-bras 5b, 6b monté sur la porte 3 via un ressort 5a, 6a, fixé en extrémité aux bras 5, 6 et avant-bras 5b, 6b respectifs dans ce mode de réalisation. Les ressorts 5a et 6a sont des moyens de rappel permettant de maintenir, lors de l'ouverture de la porte 3, une position des avant-bras 5b et 6b par rapport aux bras 5 et 6 sous forme de parallélogramme, le mouvement de ces bras 5, 6 et avant-bras 5b, 6b en parallélogramme permettant à la porte 3 de rester parallèle au fuselage 2.

Afin de guider le mouvement de dégagement des butées de la porte 3, une rampe de commande 7 comporte une glissière 7a fixée sur l'encadrement 4, associée à un galet de roulement 7b fixé sur la porte 3. Deux guides arrière 8 et avant 9 contribuent également au mouvement de la porte 3 selon l'invention, et comportent chacun une glissière 8a (respectivement 9a) fixée sur l'encadrement 4, et un galet de roulement 8b (respectivement 9b) fixé sur la porte 3. Les glissières 8a et 9a sont ouvertes en leurs extrémités avant 8c et 9c.

La cinématique d'ouverture / fermeture de la porte 3 par rapport au fuselage 2 est imprimée à la porte 3 depuis l'encadrement 4 dans un plan principal horizontal « P » de l'aéronef 1 par les deux bras 5, 6 et les avant bras 5b, 6b, et sont pilotés, de manière réversible, par les deux guides 8 et 9 entre une position de fermeture en butée dans l'encadrement 4, et une position d'ouverture hors de l'encadrement 4 avec la face intérieure de porte 3 contre le fuselage externe 2.

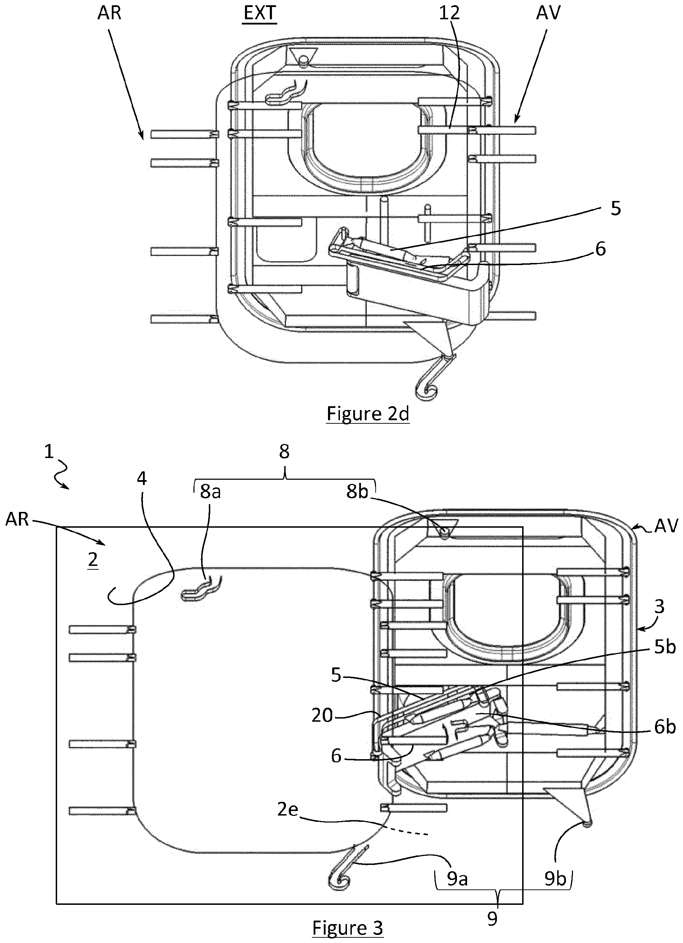

Les figures 2a à 2d montrent plus précisément une vue de dessus et en transparence, de la cinématique d'ouverture d'une porte 3 selon l'invention. Sur chacune de ces figures 2a à 2d sont représentés les deux bras 5 et 6, leurs deux avant-bras 5b et 6b, ainsi que les guides 8, 9 avec leurs glissières 8a, 9a dans lesquelles circulent les galets de roulement 8b, 9b. Depuis la figures 2a jusqu'à la figure 2d, on peut observer que le mouvement d'ouverture de la porte 3 est guidé par la forme des glissières 8a, 9a solidaires du fuselage 2 qui entraîne les galets de roulement 8b, 9b, solidaires de la porte, dans leurs glissières 8a, 9a.

En liminaire, la figure 2a présente le fonctionnement général de l'ouverture. La rampe de commande 7 d'ouverture de porte guide la porte 3 selon des positions de poussée vers l'avant AV et vers l'arrière AR de l'aéronef 2. De plus, les ressorts 5a, et 6a adaptent la position des bras 5 et 6 par rapport à la porte 3 par extension ou contraction de ces ressorts 5a et 6a. Les glissières 8a et 9a ont respectivement une forme en « S » et une forme en « épingle à cheveux ».

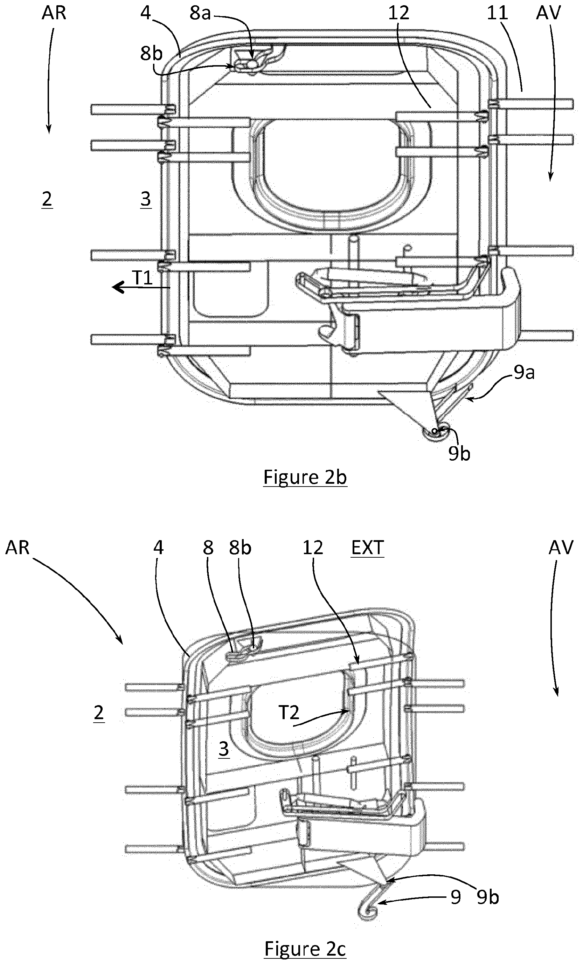

Sur la figure 2b, il apparaît que cette rampe de commande 7 génère un premier déplacement de la porte vers l'arrière AR et vers l'intérieur de l'aéronef 2 qui suit la forme des courbe des glissières 8a, 9a via les galets 8b, 9b. Une combinaison de mouvements des parties avant AV et arrière AR de la porte 3 par rotation et translation dégage les butées de porte 12 des butées 11 du fuselage 23 et amène la porte 3 en translation T1 vers l'arrière AR.

Puis l'ouverture de la porte 3 se poursuit, en référence à la figure 2c, avec une commande de déplacement de porte 3 vers l'avant AV qui entraîne la rotation de sa partie avant vers l'extérieur EXT imprimée par les galets 8b et 9b dans les guides arrière 8 et avant 9, globalement selon une translation inclinée T2. La partie avant de la porte 3 et ses butées 12 avant se dégagent alors de l'encadrement 4 vers l'extérieur EXT du fuselage d'aéronef 2.

La cinématique se poursuit, comme illustré par la figure 2d, par les bras 5 et 6 qui, en articulation avec les avant-bras 5b, 6b vers l'arrière AR génèrent une rotation de la partie arrière AR de la porte 3 et vers l'extérieure EXT, ainsi qu'une amorce de translation de la porte 3 vers l'avant AV parallèlement au fuselage 2, les butées 12 de porte arrière et avant étant alors sorties de l'encadrement 4. Le galet arrière 8b est sorti de sa glissière 8a et le galet avant 9b reste dans une position proche de la sortie de glissière 9a.

La figure 3, qui illustre la porte 3 de face, en transparence et en fin de déplacement d'ouverture, présente l'achèvement de la rotation des bras 5 et 6 autour de la liaison articulée 20 sur le côté avant AV de l'encadrement 4. Cette rotation a entraîné la porte 3 vers l'avant AV et vers la position d'ouverture finale illustrée, dans laquelle sa face interne 3i est disposée face à l'extérieur du fuselage 2e.

Dans cette position finale, les ressorts 5a et 6a (cf. figure1) maintiennent la porte 3 en position ouverte stable. Les galets de roulement 8b et 9b, fixés sur la porte 3, sont sortis de leurs glissières 8a et 9a qui restent fixées sur l'encadrement 4. Les bras 5, 6 et avant-bras 5b, 6b sont agencés contre la porte 3 sans extension des ressorts de rappel, comme dans la position initiale de référence de la porte 3 par l'effort généré par les ressorts de rappel en extension.

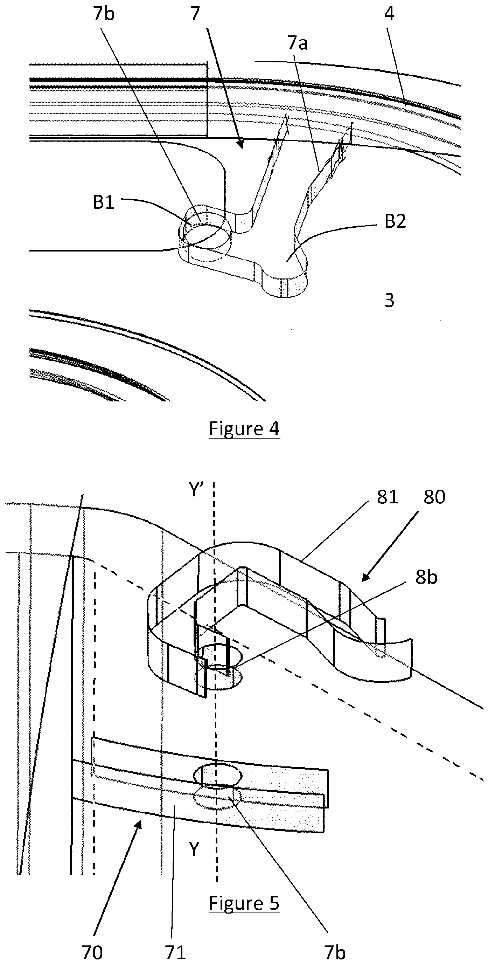

La figure 4 illustre une vue en transparence de la rampe de commande 7 mise en œuvre dans l'exemple précédemment décrit, comportant une glissière 7a fixée sur l'encadrement 4, et un galet de roulement 7b fixé sur la porte 3. Cette commande 7 guide le mouvement d'ouverture / fermeture de la porte 3 vers l'avant AV ou vers l'arrière AR par déplacement du galet 7b dans l'une ou l'autre des positions de butée B1 et B2.

Et la figure 5 présente en transparence une vue en perspective de rampe de commande 70 et de guide avant 80 d'un autre exemple de mécanisme d'ouverture / fermeture de porte selon l'invention. Dans cet exemple, le guide avant 80 en forme de « C » et la rampe de commande 70 sont positionnés entre un bras de manipulation 5 et la porte 3 (cf. figure 1). Les glissières 71 et 81 de la rampe 70 et du guide avant 80 sont montées sur le bras 5, alors que les galets 7b et 8b sont fixés co-axialement sur la porte 3 selon un axe Y'Y. Cet exemple permet donc de simplifier la coordination entre la rampe de commande 70 et le guide avant 80, et de s'affranchir de la présence des ressorts.

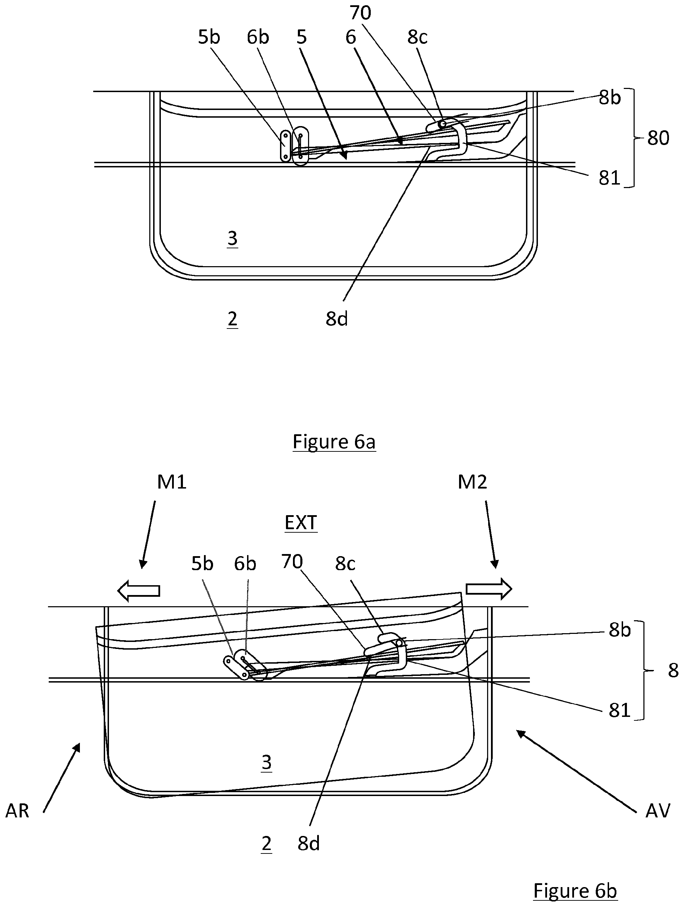

Les figures 6a à 6d montrent plus précisément en vues de dessus, schématiques et en transparence, la cinématique d'ouverture de la porte 3 mise en œuvre par le mécanisme d'ouverture intégrant la rampe de commande 70 et le guide avant 80 de la figure 5. Sur chacune de ces figures 6a à 6d, sont représentés schématiquement les deux bras 5 et 6, leurs deux avant-bras 5b et 6b, ainsi que la glissière 81 associée au galet de roulement 8b du guide avant 80.

De la figure 6a à la figure 6d, on peut observer que la cinématique d'ouverture de la porte 3 est pilotée par la forme en « C » de la glissière 81 solidaire du bras 5, alors que le galet 8b circule d'une extrémité 8c à l'autre 8d dans la glissière 81.

En position de fermeture de porte (figure 6a), le galet 8b est à l'extrémité 8c de la glissière 81, les bras 5, 6 et leurs avant-bras 5a, 6a sont en position de référence.

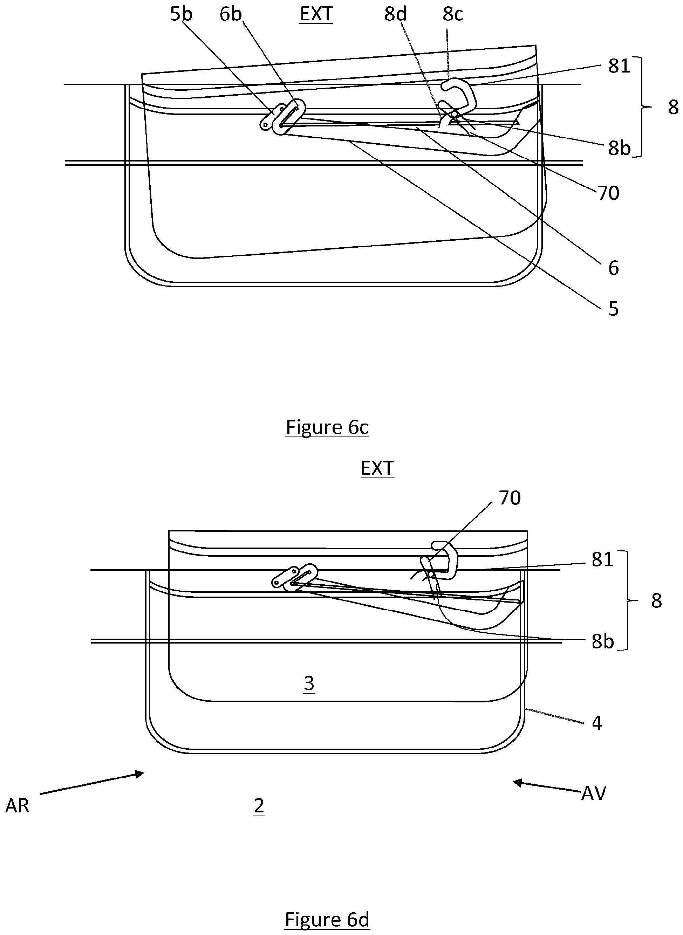

Sur les figures 6b et 6c, le galet 8b est en positions intermédiaires entre les extrémités 8c et 8d de la glissière 81. La porte 3 bascule en rotation de sorte que la partie avant se déplace vers l'avant AV et l'extérieur EXT du fuselage 2 arrière de la porte 3 et vers l'arrière AR selon le mouvement M1 pour les libérer les butées de porte 12 des butées d'encadrement 11 (cf. figure 1), et selon un mouvement M2 tout en continuant à basculer en rotation. Les avant-bras 5b, 6b passent d'une position inclinée vers l'avant AV (figure 6b) à une position inclinée vers l'arrière AR (figure 6c), par leur articulation sur les bras correspondants 5, 6 via les ressorts de rappel 5a, 6a (cf. figure 1).

Sur la figure 6d, le galet 81 arrive en position d'extrémité 8d de la glissière 81 et la porte 3 a basculé en rotation inversée par rapport à celle de la figure 6a, de sorte que la partie arrière de la porte 3 avance également vers l'extérieur EXT du fuselage 2: la porte 3 est alors sortie de son encadrement 4 parallèlement au fuselage 2. La phase finale d'ouverture de la porte 3 est identique à celle de l'exemple précédent telle qu'illustrée en figure 3.

L'invention n'est pas limitée aux exemples de réalisation décrits et représentés. Ainsi, les bras peuvent être mus par une commande électrique. La position des guides n'est pas figée. Indépendamment les unes des autres, les glissières peuvent être placées sur l'encadrement en positions haute ou basse, avant ou arrière, ou hors de l'encadrement au niveau du bras avant pour l'une des deux glissières. De même, la position de la rampe commande peut être agencée en position haute ou basse, avant ou arrière, ou encore au niveau du bras.

Par ailleurs, les glissières peuvent être fixées sur la porte et les galets de roulement sur le fuselage.

## Revendications

1. Procédé d'ouverture / fermeture d'une porte (3) agencée dans une ouverture de fuselage d'aéronef (1) définie par une structure d'encadrement (4), la porte (3) comportant une face intérieure (3i) ainsi que des parties avant (AV) et arrière (AR) définies par rapport à un axe longitudinal (X'X) de l'aéronef (1) orienté conventionnellement, la porte (3) et l'encadrement (4) de l'aéronef (1) comportant des butées de positionnement avant et arrière de la porte (3) dans l'encadrement (4), la cinématique des mouvements de la porte (3) par rapport au fuselage (2) se déroulant depuis l'encadrement (4) dans un plan principal horizontal (P) d'aéronef (1) par au moins un bras de manipulation (5, 6) couplé à un avant-bras (5b, 6b) d'articulation sur la porte (3) et étant pilotée, de manière réversible, par au moins un guidage (8, 9) entre une position de fermeture en butée dans l'encadrement (4) et une position d'ouverture hors de l'encadrement (4) en face intérieure de porte (3) contre le fuselage (2), ce procédé comporte les étapes suivantes, pour l'ouverture de la porte (3) :
- une commande à glissière (7) d'ouverture de porte (3) guide la porte (3) selon des positions vers l'avant (AV) et vers l'arrière (AR) de l'aéronef (1) ;
- cette commande (7) génère un premier déplacement de la porte (3) vers l'arrière (AR) - et vers l'intérieur de l'aéronef (1) par une combinaison de guidages à glissière (8, 9) des parties avant (AV) et arrière (AR) de la porte (3) respectivement selon une rotation et une translation, ce qui dégage les butées (12) de la porte (3) des butées(11) du fuselage (2) ;
- puis un déplacement de porte (3) par rotation autour du guidage arrière (8) et translation inclinée vers l'avant (AV) et l'extérieur (EXT) de l'aéronef (1) le long du guidage avant (9), la partie avant (AV) de la porte (3) et ses butées avant (12) se dégageant alors de l'encadrement (4) vers l'extérieur (EXT) de l'aéronef (1); et
- le bras (5, 6) est actionné en rotation autour d'une liaison articulée (20) sur un côté avant (AV) de l'encadrement (4) afin de déplacer la porte (3) vers l'avant (AV) de l'aéronef (1), son déplacement s'achevant hors de l'encadrement (4) avec la face intérieure (3i) de porte (3) contre le fuselage (2).

2. Procédé d'ouverture / fermeture selon la revendication 1 dans lequel, en mode fermeture, les étapes successives du mode d'ouverture sont enchaînées selon une cinématique inversée.

3. Procédé d'ouverture / fermeture selon l'une quelconque des revendications 1 ou 2, dans lequel des moyens de rappel (5a, 6a) permettent d'adapter la position de l'avant-bras (5b, 6b) par rapport au bras (5, 6) par extension de ces moyens de rappel (5a, 6a) pour générer un déplacement en rotation de la partie arrière (AR) de porte (3) ainsi qu'une translation de la porte (3) vers l'avant (AV) de l'aéronef (1) parallèlement au fuselage (2), les butées de porte (12) arrière (AR) et avant (AV) étant alors sorties de l'encadrement (4).

4. Aéronef (1) comportant au moins une porte (3) équipée d'un mécanisme d'ouverture / fermeture de mise en œuvre du procédé selon l'une quelconque des revendications précédentes, où le déplacement de la porte (3) dans un plan principal horizontal (P) de l'aéronef (1), est piloté par couplage entre la porte (3) et l'encadrement (4) sur une rampe de commande (7) et sur deux guides (8, 9) à glissière, avant (AV) et arrière (AR), agencés entre les parties de porte (3), respectivement avant et arrière, et l'encadrement (4) couplé à au moins un bras de manipulation (5, 6) articulé en rotation sur un côté avant (AV) de l'encadrement (4) et à la porte (3) via un avant-bras (5b, 6b).

5. Aéronef selon la revendication précédente, dans lequel la rampe de commande (7) et les guides (8, 9) comportent, chacun, une glissière (7a, 8a, 9a) associée à un galet de circulation (7b, 8b, 9b) dans la glissière (7a, 8a, 9a), les glissières (8a, 9a) de guide (8, 9) étant ouvertes en une extrémité (8c, 9c).

6. Aéronef (1) selon la revendication 5, dans lequel les glissières (7a, 8a, 9a) sont fixées sur l'encadrement (4) et les galets (7b, 8b, 9b) sont solidaires de la porte (3).

7. Aéronef (1) selon la revendication 5, dans lequel les glissières (7a, 8a, 9a) sont fixées sur la porte (3) et les galets (7b, 8b, 9b) sont solidaires de l'encadrement (4).

8. Aéronef (1) selon l'une quelconque des revendications 4 à 7, dans lequel la rampe de commande (7) est agencée en partie avant (AV) et supérieure de porte (3), et les guides (8, 9) avant (AV) et arrière (AR) sont respectivement agencés en partie avant inférieure de porte et en partie arrière supérieure de porte (3).

9. Aéronef selon l'une quelconque des revendications 4 à 8, dans lequel des moyens de rappel (5a, 6a) entre le bras (5, 6) et l'avant-bras (5b, 6b), adaptent en extension la position de l'avant-bras (5b, 6b) par rapport au bras (5, 6).

10. Aéronef (1) selon l'une quelconque des revendications 4 à 8, dans lequel la rampe de commande (70) et l'un des guides (80) sont agencés entre le bras (5, 6) et la porte (3).

11. Aéronef (1) selon la revendication précédente, dans lequel les galets (7b, 8b) sont alignés sur un même axe (Y'Y) solidaire du bras (5, 6).

12. Aéronef (1) selon l'une quelconque des revendications 4 à 11, dans lequel le mécanisme d'ouverture / fermeture comporte deux bras (5, 6) et deux avant-bras (5b, 6b), chaque bras (5, 6) étant couplé à un avant-bras bras (5b, 6b).

## Patentansprüche

1. Verfahren zur Öffnung / Schließung einer Tür (3), die in einer Rumpföffnung eines Luftfahrzeugs (1) angeordnet ist, die von einer Rahmungsstruktur (4) definiert ist, wobei die Tür (3) eine Innenseite (3i) sowie vordere (AV) und hintere (AR) Abschnitte aufweist, die im Verhältnis zu einer Längsachse (X'X) des Luftfahrzeugs (1) definiert sind, die herkömmlich ausgerichtet ist, wobei die Tür (3) und die Rahmung (4) des Luftfahrzeugs (1) vordere und hintere Positionierungsanschläge der Tür (3) in der Rahmung (4) aufweisen, wobei die Kinematik der Bewegungen der Tür (3) im Verhältnis zum Rumpf (2) von der Rahmung (4) in einer horizontalen Hauptebene (P) des Luftfahrzeugs (1) über wenigstens einen Betätigungsarm (5, 6) abläuft, der an einen vorderen Gelenkarm (5b, 6b) an der Tür (3) gekoppelt ist und von wenigstens einer Führung (8, 9) umkehrbar zwischen einer Schließposition im Anschlag in der Rahmung (4) und einer Öffnungsposition außerhalb der Rahmung (4) an der Innenseite der Tür (3) gegen den Rumpf (2) gesteuert wird, wobei das Verfahren zur Öffnung der Tür (3) die folgenden Schritte aufweist:
- eine Gleitsteuerung (7) zur Öffnung der Tür (3) führt die Tür (3) gemäß Positionen in Richtung des vorderen (AV) und hinteren (AR) Teils des Luftfahrzeugs (1) ;
- diese Steuerung (7) erzeugt eine erste Bewegung der Tür (3) in Richtung des hinteren Teils (AR) - und in Richtung des Inneren des Luftfahrzeugs (1) durch eine Kombination von Führungen mit Gleiteinrichtung (8, 9) der vorderen (AV) und hinteren (AR) Abschnitte der Tür (3) über eine Rotation beziehungsweise eine Translation, wodurch die Anschläge (12) der Tür (3) von den Anschlägen (11) des Rumpfes (2) gelöst werden;
- dann eine Bewegung der Tür (3) durch Drehung um die hintere Führung (8) und geneigte Translation in Richtung des vorderen Teils (AV) und des Äußeren (EXT) des Luftfahrzeugs (1) entlang der vorderen Führung (9), wobei sich der vordere (AV) Abschnitt der Tür (3) und deren vordere Anschläge (12) dann von der Rahmung (4) in Richtung des Äußeren (EXT) des Luftfahrzeugs (1) lösen; und
- der Arm (5, 6) wird um eine Gelenkverbindung (20) auf einer Vorderseite (AV) der Rahmung (4) gedreht, um die Tür (3) in Richtung des vorderen (AV) Teils des Luftfahrzeugs (1) zu bewegen, wobei deren Bewegung außerhalb der Rahmung (4) mit der Innenseite (3i) der Tür (3) gegen den Rumpf (2) endet.

2. Öffnungs- / Schließverfahren nach Anspruch 1, wobei im Schließmodus die aufeinanderfolgenden Schritte des Öffnungsmodus gemäß einer umgekehrten Kinematik verkettet sind.

3. Öffnungs- / Schließverfahren nach einem der Ansprüche 1 oder 2, wobei es Rückstellmittel (5a, 6a) ermöglichen, die Position des vorderen Arms (5b, 6b) im Verhältnis zum Arm (5, 6) durch Ausdehnung dieser Rückstellmittel (5a, 6a) anzupassen, um eine Drehbewegung des hinteren Abschnitts (AR) der Tür (3) sowie eine Translation der Tür (3) in Richtung des vorderen (AV) Teils des Luftfahrzeugs (1) parallel zum Rumpf (2) zu erzeugen, wobei die hinteren (AR) und vorderen (AV) Türanschläge (12) dann aus der Rahmung (4) ausgetreten sind.

4. Luftfahrzeug (1) aufweisend wenigstens eine Tür (3), die mit einem Öffnungs- / Schließmechanismus der Ausführung des Verfahrens nach einem der vorhergehenden Ansprüche ausgerüstet ist, wobei die Bewegung der Tür (3) in einer horizontalen Hauptebene (P) des Luftfahrzeugs (1) durch Kopplung zwischen der Tür (3) und der Rahmung (4) auf einer Steuerrampe (7) und auf zwei Führungen (8, 9) mit Gleiteinrichtung, einem vorderen (AV) und einem hinteren (AR), gesteuert wird, die zwischen dem vorderen beziehungsweise hinteren Abschnitt der Tür (3) angeordnet sind, und die Rahmung (4) an wenigstens einen Betätigungsarm (5, 6) gekoppelt ist, der über einen vorderen Arm (5b, 6b) drehbar an einer Vorderseite (AV) der Rahmung (4) und an der Tür (3) angelenkt ist.

5. Luftfahrzeug nach dem vorhergehenden Anspruch, wobei die Steuerrampe (7) und die Führungen (8, 9) jeweils eine Gleiteinrichtung (7a, 8a, 9a) aufweisen, die einer Laufrolle zum Fahren (7b, 8b, 9b) in der Gleiteinrichtung (7a, 8a, 9a) zugeordnet ist, wobei die Gleiteinrichtungen (8a, 9a) der Führung (8, 9) an einem Ende (8c, 9c) offen sind.

6. Luftfahrzeug (1) nach Anspruch 5, wobei die Gleiteinrichtungen (7a, 8a, 9a) an der Rahmung (4) befestigt und die Laufrollen (7b, 8b, 9b) mit der Tür (3) fest verbunden sind.

7. Luftfahrzeug (1) nach Anspruch 5, wobei die Gleiteinrichtungen (7a, 8a, 9a) an der Tür (3) befestigt und die Laufrollen (7b, 8b, 9b) mit der Rahmung (4) fest verbunden sind.

8. Luftfahrzeug (1) nach einem der Ansprüche 4 bis 7, wobei die Steuerrampe (7) im vorderen (AV) und oberen Abschnitt der Tür (3) und die vordere (AV) und hintere (AR) Führung (8, 9) im vorderen unteren Abschnitt der Tür beziehungsweise im hinteren oberen Abschnitt der Tür (3) angeordnet sind.

9. Luftfahrzeug nach einem der Ansprüche 4 bis 8, wobei Rückstellmittel (5a, 6a) zwischen dem Arm (5, 6) und dem vorderen Arm (5b, 6b) die Position des vorderen Arms (5b, 6b) im Verhältnis zum Arm (5, 6) in der Ausdehnung anpassen.

10. Luftfahrzeug (1) nach einem der Ansprüche 4 bis 8, wobei die Steuerrampe (70) und eine der Führungen (80) zwischen dem Arm (5, 6) und der Tür (3) angeordnet sind.

11. Luftfahrzeug (1) nach dem vorhergehenden Anspruch, wobei die Laufrollen (7b, 8b) auf ein und derselben Achse (Y'Y) mit dem Arm (5, 6) fest verbunden ausgerichtet sind.

12. Luftfahrzeug (1) nach einem der Ansprüche 4 bis 11, wobei der Öffnungs- / Schließmechanismus zwei Arme (5, 6) und zwei vordere Arme (5b, 6b) aufweist, wobei jeder Arm (5, 6) an einen vorderen Arm Arm (5b, 6b) gekoppelt ist.

## Claims

1. A method for opening/closing a door (3) arranged in an opening of a fuselage of an aircraft (1), this opening being defined by a frame structure (4), the door (3) comprising an inside face (3i) as well as front (AV) and rear (AR) parts defined with respect to a longitudinal axis (X'X) of the aircraft (1) oriented conventionally, the door (3) and the frame (4) of the aircraft (1) comprising front and rear positioning stops for positioning the door (3) in the frame (4), the kinematics of the movements of the door (3) relative to the fuselage (2) taking place from the frame (4) in a main horizontal plane (P) of the aircraft (1) by at least one manipulation arm (5, 6) coupled to an articulation forearm (5b, 6b) on the door (3) and being piloted, reversibly, by at least one guide (8, 9) between a closed position in abutment in the frame (4) and an open position outside the frame (4) on the inside face of the door (3) against the fuselage (2), this method it comprises the following steps, for opening the door (3):
- a slide control element (7) for opening the door (3) guides the door (3) to positions towards the front (AV) and towards the rear (AR) of the aircraft (1);
- this control element (7) generates a first movement of the door (3) towards the rear (AR) - and towards the interior of the aircraft (1) by a combination of slide guides (8, 9) of the front (AV) and rear (AR) parts of the door (3) respectively in rotation and in translation, which releases the stops (12) of the door (3) from the stops (11) of the fuselage (2);
- then, a movement of the door (3) by rotation about the rear guide (8) and inclined translation towards the front (AV) and the outside (EXT) of the aircraft (1) along the front guide (9), the front part (AV) of the door (3) and its front stops (12) then disengaging from the frame (4) towards the outside (EXT) of the aircraft (1); and
- the arm (5, 6) is actuated in rotation about an articulated link (20) on a front side (AV) of the frame (4) in order to move the door (3) towards the front (AV) of the aircraft (1), its movement ending outside the frame (4) with the inside face (3i) of the door (3) against the fuselage (2).

2. The opening/closing method as claimed in claim 1, wherein, in the closing mode, the successive steps of the opening mode are linked together in reverse kinematics.

3. The opening/closing method as claimed in either of claims 1 and 2, wherein return means (5a, 6a) make it possible to adapt the position of the forearm (5b, 6b) relative to the arm (5, 6) by extension of these return means (5a, 6a) to generate a rotational movement of the rear part (AR) of the door (3) as well as a translation of the door (3) towards the front (AV) of the aircraft (1) parallel to the fuselage (2), the rear (AR) and front (AV) door stops (12) then being out of the frame (4).

4. An aircraft (1) comprising at least one door (3) equipped with an opening/closing mechanism for implementing the method as claimed in any one of the preceding claims, the movement of the door (3) in a main horizontal plane (P) of the aircraft (1) is controlled by coupling between the door (3) and the frame (4) on a control ramp (7) and on two slide guides (8, 9), front (AV) and rear (AR), arranged between the door parts (3), respectively front and rear, and the frame (4) coupled to at least one manipulation arm (5, 6) articulated in rotation on a front side (AV) of the frame (4) and to the door (3) via a forearm (5b, 6b).

5. The aircraft as claimed in the preceding claim, wherein the control ramp (7) and the guides (8, 9) each comprise a slide (7a, 8a, 9a) associated with a circulation roller (7b, 8b, 9b) in the slide (7a, 8a, 9a), the slides (8a, 9a) of the guide (8, 9) being open at one end (8c, 9c).

6. The aircraft (1) as claimed in claim 5, wherein the slides (7a, 8a, 9a) are fixed to the frame (4) and the rollers (7b, 8b, 9b) are integral with the door (3).

7. The aircraft (1) as claimed in claim 5, wherein the slides (7a, 8a, 9a) are fixed to the door (3) and the rollers (7b, 8b, 9b) are integral with the frame (4).

8. The aircraft (1) as claimed in any one of claims 4 to 7, wherein the control ramp (7) is arranged in the front (AV) and upper part of the door (3), and the front (AV) and rear (AR) guides (8, 9) are respectively arranged in the lower front part of the door and in the upper rear part of the door (3).

9. The aircraft as claimed in any one of claims 4 to 8, wherein return means (5a, 6a) between the arm (5, 6) and the forearm (5b, 6b) adapt in extension the position of the forearm (5b, 6b) relative to the arm (5, 6).

10. The aircraft (1) as claimed in any one of claims 4 to 8, wherein the control ramp (70) and one of the guides (80) are arranged between the arm (5, 6) and the door (3).

11. The aircraft (1) as claimed in the preceding claim, wherein the rollers (7b, 8b) are aligned on one and the same axis (Y'Y) that is integral with the arm (5, 6).

12. The aircraft (1) as claimed in any one of claims 4 to 11, wherein the opening/closing mechanism comprises two arms (5, 6) and two forearms (5b, 6b), each arm (5, 6) being coupled to a forearm arm (5b, 6b).
